# EUROPEAN PATENT SPECIFICATION

(11) **EP 2 187 115 B1**
(45) Date of publication and mention of the grant of the patent: **13.06.2012**
(21) Application number: 09175480.4
(22) Date of filing: 10.11.2009
(51) Int. Cl.: F21V 5/00, F21V 29/00, F21S 8/12

(54) **Vehicular lamp**
Fahrzeuglampe
Lampe pour véhicule automobile

(30) Priority: 12.11.2008 JP 2008290242
(43) Date of publication of application: 19.05.2010
(73) Proprietor: Koito Manufacturing Co., Ltd., Tokyo 108-8711 (JP)
(72) Inventor: Koizumi, Hiroya c/o Koito Manufacturing Co.,Ltd., Shizuoka-shi, Shizuoka (JP)
(74) Representative: Intès, Didier Gérard André

(56) References cited:
- DE-A1-102004 053 302
- DE-A1-102007 024 962
- DE-U1-202007 018 181
- US-A1- 2008/ 062 709

## Description

### BACKGROUND OF THE INVENTION

### Technical Field

The present disclosure relates to a vehicular lamp, and more particularly, to a vehicular lamp that has a function of a daytime running lamp.

### Related Art

A combination headlamp has been known in the past. In the combination headlamp, a fog lamp that is an auxiliary headlight, or a clearance lamp or a turn signal lamp, that is a sign lamp, is assembled in a lamp chamber, which includes a lamp body and a cover, in addition to a passing beam (low beam) lamp and a driving beam (high beam) lamp to form a headlight. Additionally, a daytime running lamp, which is turned on during the day so as to let pedestrians or oncoming vehicles know the existence of a vehicle, has been mounted on the combination headlamp in recent years (*see* e.g., U.S. Patent Applicaton Pub. No. US2008/062709).

However, if plural lamps for emitting different light distribution patterns are provided in the lamp chamber, the size of the combination headlamp is increased. The size of the vehicular lamp that is provided in the lamp chamber and the number of the vehicular lamps need to be reduced to suppress the increase in the size of the combination headlamp.

### SUMMARY OF THE INVENTION

It is an illustrative aspect of the present invention to provide a small vehicular lamp that can emit a plurality of different light distribution patterns.

According to the present invention, there is provided a vehicular lamp comprising first and second light sources that are formed of semiconductor light emitting devices, a first optical member that controls light emitted from the first light source, a second optical member that controls light emitted from the second light source, a projection lens that emits the light controlled by the first and second optical members toward the front side of a vehicle; and a single heat sink that is thermally connected to both the first and second light sources. The first and second light sources are configured to not be turned on at the same time.

According to the present invention, there is provided a first light distribution pattern formed by the light emitted from the first light source and a second light distribution pattern formed by the light emitted from the second light source, using a single vehicular lamp. The first and second light sources are thermally connected to a single heat sink and are configured to not be turned on at the same time, so that the size of the heat sink can be reduced. As a result, it may be possible to obtain a small vehicular lamp that can form a plurality of different light distribution patterns.

According to the invention the projection lens includes a main lens and a flange that extends from an edge portion of the main lens, the light emitted from the first light source may be emitted through the main lens toward the front side of the vehicle, and the light emitted from the second light source may be emitted through the flange toward the front side of the vehicle. The main lens, which is a projection lens for the first light source, is integrally formed with the flange, which is a projection lens for the second light source, so that the number of components can also be reduced. Accordingly, it may be possible to reduce the size and manufacturing costs of the vehicular lamp.

The first light source, the first optical member, and the main lens may form a passing beam lamp. Further, the second light source, the second optical member, and the flange may form a daytime running lamp. The single vehicular lamp may thus have a function of a passing beam lamp and also have a function of a daytime running lamp, so that the number of vehicular lamps to be provided in the lamp chamber can be reduced. As a result, it may be possible to reduce the size of the combination headlamp.

The amount of heat generated from the first light source may be larger than the amount of heat generated from the second light source, and the heat sink may thus be formed to radiate at least the amount of heat generated from the first light source. In this case, the heat sink may be preferably used for both the first and second light sources. Furthermore, since the amount of heat radiated from the heat sink is larger than the amount of heat generated from the second light source, it may be possible to sufficiently cool the second light source and to extend the lifetime of the second light source.

Other aspects and advantages of the present invention will be apparent from the following description, the drawings and the claims.

### BRIEF DESCRIPTION OF THE DRAWINGS

Fig. 1 is a front view of a vehicular lamp according to an exemplary embodiment of the invention;
Fig. 2 is a cross-sectional view of the vehicular lamp of Fig. 1 taken along a line X-X;
Fig. 3 is a front view of a vehicular lamp according to another exemplary embodiment of the invention;
Fig. 4 is a cross-sectional view of the vehicular lamp of Fig. 3 taken along a line Y-Y; and
Fig. 5 is a view illustrating a vehicular lamp according to still another exemplary embodiment of the invention.

### DETAILED DESCRIPTION OF EXEMPLARY EMBODIMENTS

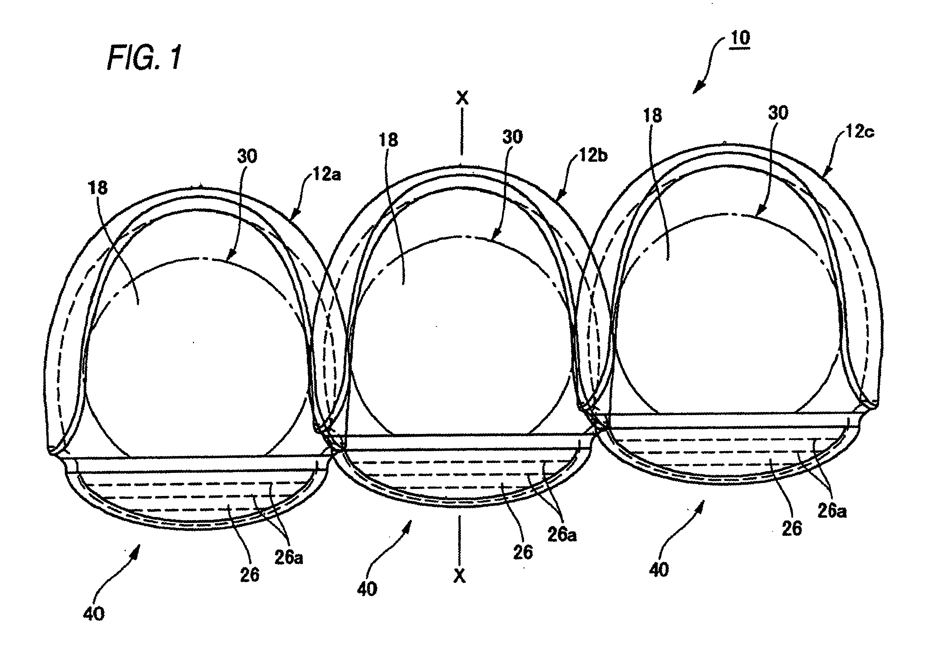

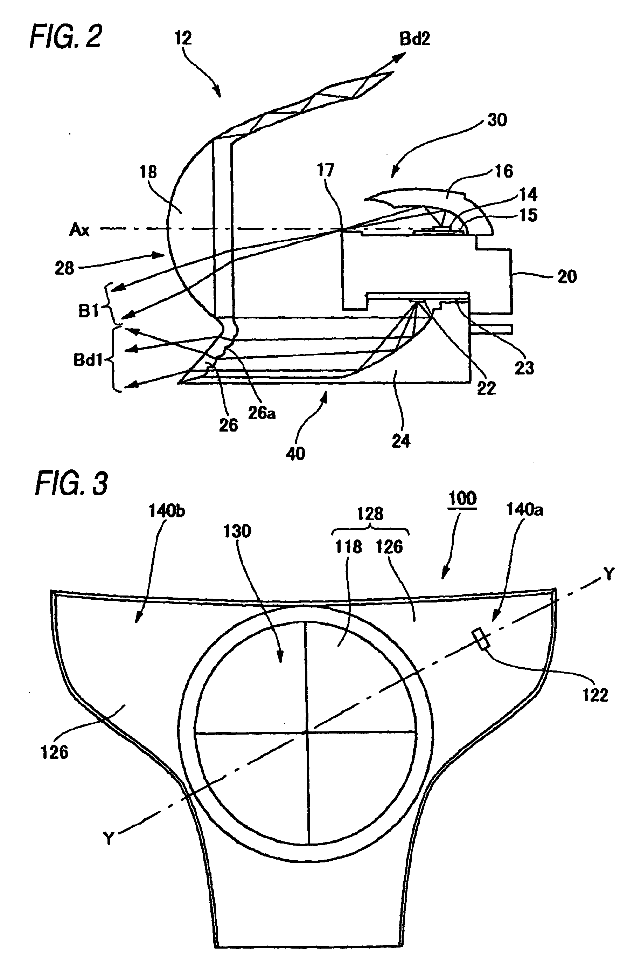

Exemplary embodiments of the present invention will be described in detail below with reference to the drawings. Fig. 1 is a front view of a vehicular lamp 10 according to an exemplary embodiment of the invention. Fig. 2 is a cross-sectional view of the vehicular lamp 10 shown in Fig. 1, taken along the line X-X.

A vehicular lamp 10 is provided in a lamp chamber of a combination headlamp that includes a lamp body and a cover (not shown), and has both a function of a passing beam lamp and a function of a daytime running lamp. The passing beam lamp is a lamp that is turned on when a vehicle travels around a city, or the like, at night, and the daytime running lamp is a lamp that is turned on during the day so as to let pedestrians or oncoming vehicles know of the existence of the vehicle. Meanwhile, a driving beam lamp, a fog lamp, a turn signal lamp, and the like, may be provided in the lamp chamber of the combination headlamp in addition to the vehicular lamp 10.

As shown in Fig. 1, the vehicular lamp 10 includes three lamp units, that is, a first lamp unit 12a, a second lamp unit 12b, and a third lamp unit 12c, which are arranged side by side in a width direction of a vehicle. The first lamp unit 12a, the second lamp unit 12b, and the third lamp unit 12c have the same structure. Each of the lamp units is appropriately referred to as a "lamp unit 12" in the following description.

As shown in Figs. 1 and 2, the lamp unit 12 includes a first light source 14, a first heat conductive insulating substrate 15, a first reflector 16 used as a first optical member, a heat sink 20, a second light source 22, a second heat conductive insulating substrate 23, a second reflector 24 used as a second optical member, and a projection lens 28. The projection lens 28 includes a main lens 18 and a flange 26.

In this embodiment, the first light source 14, the first heat conductive insulating substrate 15, the first reflector 16, and the main lens 18 form a passing beam lamp section 30. Further, the second light source 22, the second heat conductive insulating substrate 23, the second reflector 24, and the flange 26 form a daytime running lamp section 40. The passing beam lamp section 30 is provided at an upper portion of the lamp unit 12, and the daytime running lamp section 40 is provided at a lower portion of the lamp unit.

The structure of the passing beam lamp section 30 will now be described. The passing beam lamp section 30 is a so-called projector type lamp for emitting light, which is concentrated and reflected near an optical axis Ax, toward the front side through the main lens 18. When a vehicle headlight including the lamp unit 12 is mounted on a vehicle, the optical axis Ax of the passing beam lamp section 30 is inclined downward with respect to a longitudinal direction of the vehicle by an angle of about 0.3 to about 0.6°.

The heat sink 20 is made of metal such as aluminum, which has high thermal conductivity, and is formed in the shape of a substantially rectangular parallelepiped block. A part of an upper surface of the heat sink 20 is formed to be substantially horizontal, and the first heat conductive insulating substrate 15 is provided on the upper surface. The first heat conductive insulating substrate 15 is made of a material such as ceramic that has high thermal conductivity. The first light source 14 is provided on the first heat conductive insulating substrate 15. The first light source 14 is a semiconductor light emitting device such as an LED. Heat generated from the first light source 14 is transferred to the heat sink 20 through the first heat conductive insulating substrate 15, and is radiated away. That is, the first light source 14 is thermally connected to the heat sink 20. Electric power is supplied to the first light source 14 through a wiring pattern that is formed on the first heat conductive insulating substrate 15. The first light source 14 is positioned so that a light emitting point of the first light source 14 is positioned on the optical axis Ax, while a light emitting direction of the first light source 14 is orthogonal to the optical axis Ax of the passing beam lamp section 30. Furthermore, a shade 17, which makes a light distribution pattern of the light emitted from the passing beam lamp section 30, is provided at the front end of the upper surface of the heat sink 20.

The first reflector 16 is provided to cover the rear side, and upper sides of the first light source 14. Moreover, the first reflector 16 reflects the light, which is emitted from the first light source 14, toward the front side, makes the light enter the main lens 18, and emits the light in a given emission direction. At least a part of the first reflector 16 is formed in the shape of an elliptic spherical surface that is formed of, for example, a composite elliptic surface or the like. Moreover, the elliptic spherical surface is set so that the shape of a cross section of the elliptic spherical surface, which includes the optical axis Ax of the passing beam lamp section 30, formes at least a part of an elliptical shape. Furthermore, the eccentricity of the elliptical shape is set to be gradually increased from a vertical cross section toward a horizontal cross section. The portion of the first reflector 16, which is formed in the shape of an elliptic spherical surface, has a first focal point that is positioned at substantially the center of the first light source 14, and has a second focal point that is positioned at the front edge of the heat sink 20. The shade 17, which makes the light distribution pattern of the passing beam, is provided at the front end of the heat sink 20.

The main lens 18 is formed of a plane-convex aspherical lens that has a convex front surface and a flat rear surface. The main lens projects a light source image, which is formed by the shade 17, toward the front side as a reverse image. The main lens 18 is disposed such that a rear focal point of the main lens 18 is positioned at the second focal point of the portion of the first reflector 16 formed in the shape of an elliptic spherical surface.

When current is supplied to the first light source 14 of the passing beam lamp section 30, the light emitted from the first light source 14 is emitted forward through the main lens 18 after being reflected from the reflecting surface of the first reflector 16. In this case, a part of the light, which is emitted from the first light source 14, is shielded by the shade 17, so that light having a given light distribution pattern required for a passing beam is emitted. Light B1 emitted from the passing beam lamp section 30 is shown in Fig. 2.

The structure of the daytime running lamp section 40 will be described below. Like the first light source 14, the second light source 22, which is a light source of the daytime running lamp section 40, is thermally connected to the heat sink 20. A part of a lower surface of the heat sink 20 is formed to be substantially horizontal, and the second heat conductive insulating substrate 23 is provided on the lower surface. The second heat conductive insulating substrate 23 is made of a material, such as ceramic, that has high thermal conductivity. The second light source 22 is provided on the second heat conductive insulating substrate 23. The second light source 22 is a semiconductor light emitting device, such as an LED. Heat generated from the second light source 22 is transferred to the heat sink 20 through the second conductive insulating substrate 23, and is radiated away. Electric power is supplied to the second light source 22 through a wiring pattern that is formed on the second heat conductive insulating substrate 23. The second light source 22 is disposed so that a light emitting direction of the second light source 22 faces the lower side in the vertical direction.

The second reflector 24 is provided below the second light source 22. The second reflector 24 has a reflecting surface that reflects the light emitted from the second light source 22. Most of the light emitted from the second deflector 24 enters the flange 26 of the projection lens 28 that is provided in front of the second reflector 24. The flange 26 is a plate-like member that extends from the lower edge portion of the main lens 18. Lens steps 26a are formed at the flange 26. The lens steps 26a are formed so as to make a given light distribution pattern required for a daytime running lamp.

When current is supplied to the second light source 22 of the daytime running lamp section 40, most of the light emitted from the second light source 22 is emitted forward through the flange 26 after being reflected from the reflecting surface of the second reflector 24. In this case, light Bd1 having a given light distribution pattern required for a daytime running lamp is made by the lens steps 26a that are formed at the flange 26. As shown by light Bd2 of Fig. 2, a part of the light, which is emitted from the second light source 22, is emitted upward through the inside of the main lens 18 after being reflected from the reflecting surface of the second reflector 24.

As described above, the passing beam lamp section 30 is a lamp that is turned on at night, and the daytime running lamp section 40 is a lamp that is turned on during the day. For this reason, the passing beam lamp section 30 and the daytime running lamp section 40 are not turned on at the same time. Accordingly, the first and second light sources 14 and 22 are configured to not be turned on at the same time. For example, if the first and second light sources 14 and 22 are configured to be switched on by separate switches, there is a possibility that the switches are operated so as to turn on the first and second light sources at the same time. However, a lighting control circuit may be configured so that the each of the light sources will not turn on when any one of the other light sources is already turned on.

If the first and second light sources 14 and 22 are configured to not be turned on at the same time, the heat sink 20 does not need to be as large as a heat sink that is required when the first and second light sources are turned on at the same time. In this embodiment, since the light emission luminance and power consumption of the first light source 14 of the passing beam lamp section 30 are higher than those of the second light source 22 of the daytime running lamp section 40, the amount of heat generated from the first light source 14 is also larger than that from the second light source 22. Accordingly, if the heat sink 20 is formed to radiate at least the amount of heat generated from the first light source 14, the heat sink 20 may be preferably used for both the first and second light sources 14 and 22. Further, since the amount of heat radiated from the heat sink 20 is larger than the amount of heat generated from the second light source 22, it may be possible to sufficiently cool the second light source 22 and to extend the lifetime of the second light source 22.

As described above, in this embodiment, it may be possible to make the light distribution pattern that is formed by the light emitted from the first light source 14 and the light distribution pattern that is formed by the light emitted from the second light source 22, using the single lamp unit 12. The single lamp unit 12 has both a function of a passing beam lamp and a function of a daytime running lamp, as described above, so that the number of lamps to be provided in the lamp chamber can be reduced. As a result, it may be possible to reduce the size of the combination headlamp.

In this embodiment, the first and second light sources 14 and 22 are thermally connected to the single heat sink 20 and the first and second light sources 14 and 22 are configured to not be turned on at the same time, so that the size of the heat sink 20 may be reduced. As a result, it may be possible to obtain a small lamp unit 12 that can emit a plurality of different light distribution patterns. Further, it may be possible to form a compact vehicular lamp 10 by arranging three small lamp units 12, each having the above-mentioned structure, side by side.

According to this embodiment, the heat generated from the first and second light sources 14 and 22 is radiated by the single heat sink 20. Accordingly, it may be possible to reduce the number of components, manufacturing cost, and weight in comparison with when separate heat sinks are provided at the first and second light sources 14 and 22, respectively.

Furthermore, in this embodiment, the main lens 18 of the passing beam lamp section 30 is integrally formed with the flange 26 of the daytime running lamp section 40. Accordingly, it may be possible to reduce the number of components and manufacturing costs. Furthermore, since the main lens 18 is integrally formed with the flange 26, a part of the light emitted from the second light source 22 is emitted upward through the inside of the main lens 18, after being reflected from the reflecting surface of the second reflector 24, as shown by light Bd2 of Fig. 2. The main lens 18 guides the light emitted from the second light source 22 as described above, so that it may be possible to increase the light emitting area of a daytime running lamp.

According to this embodiment, the passing beam lamp section 30 is integrally formed with the daytime running lamp section 40. Accordingly, the vehicular lamp has substantially the same light emitting area during the day and at night. Since the light emitting area is substantially the same, it may be possible to obtain a vehicular lamp that has a good, neat appearance in comparison to when the light is emitted from other regions.

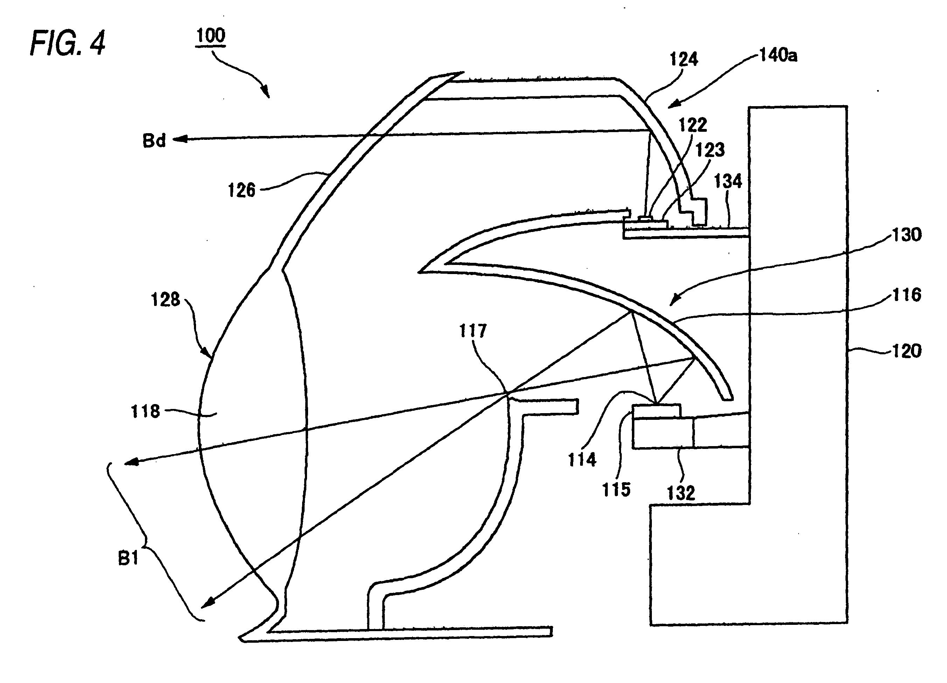

Fig. 3 is a front view of a vehicular lamp 100 according to another exemplary embodiment of the invention. Fig. 4 is a cross-sectional view of the vehicular lamp 100 of Fig. 3 taken along the line Y-Y. The vehicular lamp 100 is also provided in a lamp chamber (not shown) of a combination headlamp, and has both a function of a passing beam lamp and a function of a daytime running lamp.

As shown in Fig. 3, the vehicular lamp 100 includes a passing beam lamp section 130, and left and right daytime running lamp sections 140a and 140b that are provided on left and right sides of the passing beam lamp section 130. In Fig. 4, the cross sections Y-Y of the left daytime running lamp section 140a and the passing beam lamp section 130 are shown. Since the left and right daytime running lamp sections 140a and 140b are symmetrical with respect to each other, the structure of mainly the left daytime running lamp section 140a will be described below.

As shown in Figs. 3 and 4, the vehicular lamp 100 includes a first light source 114, a first heat conductive insulating substrate 115, a first reflector 116 used as a first optical member, a heat sink 120, a second light source 122, a second heat conductive insulating substrate 123, a second reflector 124 used as a second optical member, and a projection lens 128. The projection lens 128 includes a main lens 118 and a flange 126.

In this embodiment, the first light source 114, the first heat conductive insulating substrate 115, the first reflector 116, and the main lens 118 form a passing beam lamp section 130. Further, the second light source 122, the second heat conductive insulating substrate 123, the second reflector 124, and the flange 126 form a left daytime running lamp section 140a.

The structure of the passing beam lamp section 130 will be described below. The passing beam lamp section 130 is a projector type lamp for emitting light, which is concentrated and reflected near an optical axis, toward the front side through the main lens 118. Since the optical components of the passing beam lamp section, that is, the first light source 114, the first reflector 116, a shade 117, and the main lens 118 are the same as those of the passing beam lamp section 30 described with reference to Figs. 1 and 2, the detailed description thereof will be omitted herein. Meanwhile, in this embodiment, the first light source 114 and the first heat conductive insulating substrate 115 are provided on a plate-like first fixing member 132 that extends from the heat sink 120. The first fixing member 132 is made of metal such as aluminum, which has high thermal conductivity, and is integrally formed with the heat sink 120. Heat generated from the first light source 114 is transferred to the heat sink 120 through the first heat conductive insulating substrate 115 and the first fixing member 132, and is radiated away. That is, the first light source 114 is thermally connected to the heat sink 120.

When current is supplied to the first light source 114 of the passing beam lamp section 130, the light emitted from the first light source 114 is emitted forward through the main lens 118 after being reflected from the reflecting surface of the first reflector 116. In this case, a part of the light, which is emitted from the first light source 114, is shielded by the shade 117, so that light of a given light distribution pattern required for a passing beam is emitted. Light B1 emitted from the passing beam lamp section 130 is shown in Fig. 4.

The structure of the left daytime running lamp section 140a will be described below. Like the first light source 114, the second light source 122, which is a light source of the left daytime running lamp section 140a, is thermally connected to the heat sink 120. The second light source 122 is provided on a plate-like second fixing member 134 that extends from the heat sink 120 with the second heat conductive insulating substrate 123 interposed therebetween. Heat generated from the second light source 122 is transferred to the heat sink 120 through the second heat conductive insulating substrate 123 and the second fixing member 134, and is radiated away. In this embodiment, the second light source 122, which is a semiconductor light emitting device such as an LED, is disposed so that a light emitting direction of the second light source 122 is inclined by about 30° counterclockwise from the horizontal direction.

The second reflector 124 is provided to cover the circumference of the second light source 122. The second reflector 124 has a reflecting surface that reflects the light emitted from the second light source 122. The light emitted from the second reflector 124 enters the flange 126 of the projection lens 128 that is provided in front of the second reflector 124. The flange 126 is a plate-like member that has a substantially triangular shape in a front view and extends from the left upper edge portion of the projection lens 128. Lens steps (not shown) are formed at the flange 126. The lens steps are formed so as to emit a given light distribution pattern required for a daytime running lamp.

When current is supplied to the second light source 122 of the left daytime running lamp section 140a, the light emitted from the second light source 122 is emitted forward through the flange 126 after being reflected from the reflecting surface of the second reflector 124. In this case, light Bd of a given light distribution pattern required for a daytime running lamp is emitted by the lens steps that are formed at the flange 126.

The passing beam lamp section 130 is a lamp that is turned on at night, and the daytime running lamp section 140 is a lamp that is turned on during the day. For this reason, the passing beam lamp section 130 and the daytime running lamp section 140 are not turned on at the same time. Accordingly, the first and second light sources 114 and 122 are configured to not be turned on at the same time. For example, if the the first and second light sources 114 and 122 are configured to be switched on by separate switches, there is a possibility that the switches are operated so as to turn on the first and second light sources at the same time. However, a lighting control circuit may be configured so that the each of the light sources will not turn on when any one of the other light sources is already turned on.

If the first and second light sources 114 and 122 are configured to not be turned on at the same time, the heat sink 120 does not need to be as large as a heat sink that is required when the first and second light sources are turned on at the same time. In this embodiment, since the light emission luminance and power consumption of the first light source 114 of the passing beam lamp section 130 are higher than those of the second light source 122 of the left daytime running lamp section 140a, the amount of heat generated from the first light source is also larger than that from the second light source. Accordingly, if the heat sink 120 is formed to radiate at least the amount of heat generated from the first light source 114, the heat sink 120 may be preferably used for both the first and second light sources 114 and 122. Furthermore, since the amount of heat radiated from the heat sink 120 is larger than the amount of heat generated from the second light source 122, it may be possible to sufficiently cool the second light source 122 and to extend the lifetime of the second light source 122.

As described above, in this embodiment, it may be possible to make the light distribution pattern that is formed by the light emitted from the first light source 114 and the light distribution pattern that is formed by the light emitted from the second light source 122, using the single vehicular lamp 100. The single vehicular lamp 100 has both a function of a passing beam lamp and a function of a daytime running lamp as described above, so that the number of lamps to be provided in the lamp chamber can be reduced. As a result, it may be possible to reduce the size of the combination headlamp.

In this embodiment, the first and second light sources 114 and 122 are thermally connected to the single heat sink 120 and the first and second light sources 114 and 122 are configured to not be turned on at the same time, so that the size of the heat sink 120 may be reduced. As a result, it may be possible to obtain a small vehicular lamp 100 that can emit a plurality of different light distribution patterns.

According to this embodiment, the heat generated from the first and second light sources 114 and 122 is radiated by the single heat sink 120. Accordingly, it may be possible to reduce the number of components, manufacturing costs, and weight in comparison with when the heat sinks are provided at the first and second light sources 114 and 122, respectively.

Moreover, in this embodiment, the main lens 118 of the passing beam lamp section 130 is integrally formed with the flange 126 of the daytime running lamp section 140. Accordingly, it may be possible to reduce the number of components and manufacturing costs.

According to this embodiment, the passing beam lamp section 130 is integrally formed with the daytime running lamp section 140. Accordingly, the vehicular lamp has substantially the same light emitting area during the day and at night. Since the light emitting area is substantially the same, it may be possible to obtain a vehicular lamp that has a good, neat appearance in comparison with when light is emitted from other regions.

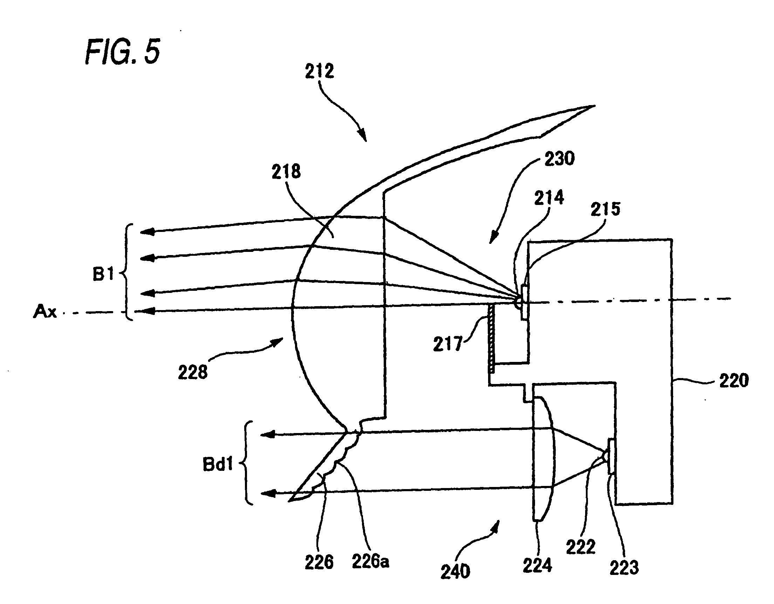

Fig. 5 is a view illustrating a vehicular lamp according to still another exemplary embodiment of the invention. Like the vehicular lamp 10 shown in Fig. 1, the vehicular lamp includes three lamp units 212, shown in Fig. 5, arranged side by side. The vehicular lamp according to this embodiment is also provided in a lamp chamber (not shown) of a combination headlamp, and has a function of a passing beam lamp and a function of a daytime running lamp.

As shown in Fig. 5, the lamp unit 212 includes a first light source 214, a first heat conductive insulating substrate 215, a shade 217 used as a first optical member, a heat sink 220, a second light source 222, a second heat conductive insulating substrate 223, an inner lens 224 used as a second optical member, and a projection lens 228. The projection lens 228 includes a main lens 218 and a flange 226.

In this embodiment, the first light source 214, the first heat conductive insulating substrate 215, the shade 217, and the main lens 218 form a passing beam lamp section 230. Further, the second light source 222, the second heat conductive insulating substrate 223, the inner lens 224, and the flange 226 form a daytime running lamp section 240. The passing beam lamp section 230 is provided at an upper portion of the lamp unit 212, and the daytime running lamp section 240 is provided at a low portion of the lamp unit.

The structure of the passing beam lamp section 230 will be described below. The passing beam lamp section 230 is a so-called direct-projection type lamp for directly emitting light, from the first light source 214 toward the front side, by the main lens 218. When a vehicular lamp receiving the lamp unit 212 is mounted on a vehicle, an optical axis Ax of the passing beam lamp section 230 is inclined downward with respect to a longitudinal direction of the vehicle by an angle of about 0.3 to about 0.6°.

The heat sink 220 is made of metal such as aluminum, which has high thermal conductivity, and is formed in the shape of a substantially rectangular parallelepiped block. A part of an upper front surface of the heat sink 220 is formed to be substantially horizontal, and the first heat conductive insulating substrate 215 is provided on the front surface. The first heat conductive insulating substrate 215 is made of a material such as ceramic that has high thermal conductivity. The first light source 214 is provided on the first heat conductive insulating substrate 215. The first light source 214 is a semiconductor light emitting device such as an LED. Heat generated from the first light source 214 is transferred to the heat sink 220 through the first heat conductive insulating substrate 215, and is radiated away. That is, the first light source 214 is thermally connected to the heat sink 220. Electric power is supplied to the first light source 214 through a wiring pattern that is formed on the first heat conductive insulating substrate 215. The first light source 214 is positioned so that a light emitting point of the first light source is positioned on the optical axis Ax while a light emitting direction of the first light source is almost parallel to the optical axis Ax of the passing beam lamp section 230.

The shade 217 is a plate-like member that is provided in front of the first light source 214 and extends along a vertical plane orthogonal to the optical axis Ax. The shade makes a boundary between the light and darkness of the light entering the main lens 218 on the basis of the shape of the upper edge portion of the shade 217 that is projected forward, by shielding a part of the light, which is emitted from the first light source 214, at an upper edge portion thereof. The projected shape is the shape of, for example, a straight line extending in the width direction of the vehicle.

The main lens 218 is formed of a plane-convex aspherical lens that has a convex front surface and a flat rear surface, and the focal length fa of the main lens is set to a relatively large value. The main lens 218 is disposed so that a rear focal point of the main lens 218 is positioned at the upper edge portion of the shade 217.

When current is supplied to the first light source 214 of the passing beam lamp section 230 having the above-mentioned structure, the light emitted from the first light source 214 is slightly converged to the vicinity of the optical axis Ax by main lens 218 and is reversed and emitted forward. In this case, the light emitted from the first light source 214, which travel below the lower side of the optical axis Ax, is blocked by the shade 217. For this reason, light is not emitted upward from the lamp unit 212 toward the front side. Light B1 emitted from the passing beam lamp section 230 is shown in Fig. 5.

The structure of the daytime running lamp section 240 will be described below. Like the first light source 214, the second light source 222, which is a light source of the daytime running lamp section 240, is thermally connected to the heat sink 220. A lower portion of the heat sink 220 is formed in the shape of a substantially rectangular parallelepiped block of which a part is cut, and the second heat conductive insulating substrate 223 is provided on the lower front surface of the heat sink 220. The second heat conductive insulating substrate 223 is made of a material such as ceramic that has high thermal conductivity. The second light source 222 is provided on the second heat conductive insulating substrate 223. The second light source 222 is a semiconductor light emitting device such as an LED. Heat generated from the second light source 222 is transferred to the heat sink 220 through the second conductive insulating substrate 223, and is radiated away. Electric power is supplied to the second light source 222 through a wiring pattern that is formed on the second heat conductive insulating substrate 223. The second light source 222 is disposed so that a light emitting direction of the second light source 222 faces the front side of the lamp.

The inner lens 224 is provided in front of the second light source 222. The inner lens 224 converts the light, which is emitted from the second light source 222, into parallel light, and makes the light enter the flange 226.

The flange 226 is a plate-like member that extends from the lower edge portion of the main lens 218. Lens steps 226a are formed at the flange 226. The lens steps 226a are formed so as to emit a given light distribution pattern required for a daytime running lamp.

When current is supplied to the second light source 222 of the daytime running lamp section 240, most of the light emitted from the second light source 222 is emitted forward through the flange 226 after being converted into parallel light by the inner lens 224. In this case, light Bd1, which has a given light distribution pattern required for a daytime running lamp, is emitted by the lens steps 226a that are formed at the flange 226. Further, although not shown in Fig. 5, a part of the light emitted from the second light source 222 is emitted upward through the main lens 218 like the light Bd2 shown in Fig. 2.

The passing beam lamp section 230 is a lamp that is turned on at night, and the daytime running lamp section 240 is a lamp that is turned on during the day. For this reason, the passing beam lamp section 230 and the daytime running lamp section 240 are not turned on at the same time. Accordingly, the first and second light sources 214 and 222 are configured to not be turned on at the same time. For example, if the first and second light sources 214 and 222 are configured to be switched on by separate switches, there is a possibility that the switches are operated so as to turn on the first and second light sources at the same time. However, a lighting control circuit may be configured so that each of the light sources will not turned on when any one of the other light sources is already turned on.

If the first and second light sources 214 and 222 are configured not to be turned on at the same time, the heat sink 220 does not need to be as large as a heat sink that is required when the first and second light sources 214 and 222 are turned on at the same time. In this embodiment, since the light emission luminance and power consumption of the first light source 214 of the passing beam lamp section 230 are higher than those of the second light source 222 of the daytime running lamp section 240, the amount of heat generated from the first light source is also larger than that from the second light source 222. Accordingly, if the heat sink 220 is formed to radiate at least the amount of heat generated from the first light source 214, the heat sink 220 may be preferably used for both the first and second light sources 214 and 222. Moreover, since the amount of heat radiated from the heat sink 220 is larger than the amount of heat generated from the second light source 222, it may be possible to sufficiently cool the second light source 222 and to extend the lifetime of the second light source 222.

As described above, in this embodiment, it may be possible to make the light distribution pattern that is formed by the light emitted from the first light source 214 and the light distribution pattern that is formed by the light emitted from the second light source 222, using the single lamp unit 212. The single lamp unit 212 has a function of a passing beam lamp and a function of a daytime running lamp as described above, so that the number of lamps to be provided in the lamp chamber is reduced. As a result, it may be possible to reduce the size of the combination headlamp.

In this embodiment, the first and second light sources 214 and 222 are thermally connected to the single heat sink 220 and the first and second light sources 214 and 222 are configured to not be turned on at the same time, so that the size of the heat sink 220 may be reduced. As a result, it may be possible to obtain a small lamp unit 212 that can emit a plurality of different light distribution patterns. Further, it may be possible to form a compact vehicular lamp by arranging three small lamp units 212 having the above-mentioned structure side by side.

According to this embodiment, heat generated from the first and second light sources 214 and 222 is radiated by the single heat sink 220. Accordingly, it may be possible to reduce the number of components, manufacturing costs, and weight in comparison with when heat sinks are provided at the first and second light sources 214 and 222, respectively.

Moreover, in this embodiment, the main lens 218 of the passing beam lamp section 230 is integrally formed with the flange 226 of the daytime running lamp section 240. Accordingly, it may be possible to reduce the number of components and manufacturing costs. Furthermore, since the main lens 218 is integrally formed with the flange 226, a part of the light emitted from the second light source 222 is emitted upward through the main lens 218 as described above. The main lens 218 guides light emitted from the second light source 222 as described above, so that it may be possible to increase the light emitting area of a daytime running lamp.

According to this embodiment, the passing beam lamp section 230 is integrally formed with the daytime running lamp section 240. Accordingly, the vehicular lamp has substantially the same light emitting area during the day and at night. Since the light emitting area is substantially the same, it may be possible to obtain a vehicular lamp that has good, neat appearance in comparison with when light is emitted from other regions.

The invention has been described above with reference to the above discussed embodiments. These embodiments are illustrative, and it will be understood by those skilled in the art that various modifications may be made to the combination of components and processes and be within the scope of the present invention, as defined by the appended claims.

For example, the single vehicular lamp has had both a function of a passing beam lamp and a function of a daytime running lamp in the above-mentioned embodiments, but the combination of lamps of light distribution patterns is not limited thereto. As long as the lamps are not turned on at the same time, the combination of any lamps may be applied. For example, the combination of a driving beam and a daytime running lamp, the combination of an IR (infrared) projector and a daytime running lamp, and the like may be applied.

## Claims

1. A vehicular lamp comprising:
first (14, 114, 214) and second (22, 122, 222) light sources that are formed of semiconductor light emitting devices;
a first optical member (16, 17, 116, 117, 217) that controls light emitted from the first light source (14, 114, 214);
a second optical member (24, 124, 224) that controls light emitted from the second light source (22, 122, 222);
a projection lens (28, 128, 228) that emits the light controlled by the first (16, 17, 116, 117, 217) and second (24, 124, 224) optical members toward the front side of a vehicle; and
a single heat sink (20, 120, 220) that is thermally connected to both the first (14, 114, 214) and second (22, 122, 222) light sources,
the first (14, 114, 214) and second (22, 122, 222) light sources are configured to not be turned on at the same time,
**characterized in that** the projection lens (28, 128, 228) includes a main lens (18, 118, 218) and a flange (26, 126, 226) that extends from an edge portion of the main lens (18, 118, 218), the flange (26, 126, 226) being integrally formed with the main lens (18, 118, 218),
**in that** the light emitted from the first light source (14, 114, 214) is emitted through the main lens (18, 118, 218) toward the front side of the vehicle, and
**in that** the light emitted from the second light source (22, 122, 222) is emitted through the flange (26, 126, 226) toward the front side of the vehicle.

2. The vehicular lamp according to claim 1,
wherein the first light source (14, 114, 214), the first optical member (16, 17, 116, 117, 217), and the main lens (18, 118, 218) form a passing beam lamp.

3. The vehicular lamp according to claim 1 or 2,
wherein the second light source (22, 122, 222), the second optical member (24, 124, 224), and the flange (26, 126, 226) form a daytime running lamp.

4. The vehicular lamp according to any one of claims 1 to 3,
wherein the amount of heat generated from the first light source (14, 114, 214) is larger than that from the second light source (22, 122, 222), and
the heat sink (20, 120, 220) is configured to radiate heat generated from at least the first light source (14, 114, 214).

## Patentansprüche

1. Fahrzeuglampe umfassend:
erste (14, 114, 214) und zweite (22, 122, 222) Lichtquellen, welche von lichtemittierenden Halbleitervorrichtungen gebildet werden,
ein erstes optisches Element (16, 17, 116, 117, 217), welches das von der ersten Lichtquelle (14, 114, 214) emittierte Licht steuert,
ein zweites optisches Element (24, 124, 224), welches das von der zweiten Lichtquelle (22, 122, 222) emittierte Licht steuert,
eine Projektionsoptik (28, 128, 228), welche das von den ersten (16, 17, 116, 117, 217) und zweiten (24, 124, 224) optischen Elementen gesteuerte Licht in Richtung der Vorderseite eines Fahrzeuges emittiert, und
einen einzelnen Kühlkörper (20, 120, 220), welcher sowohl mit der ersten (14, 114, 214) als auch der zweiten (22, 122, 222) Lichtquelle thermisch verbunden ist,
wobei die erste (14, 114, 214) und zweite (22, 122, 222) Lichtquelle dazu ausgebildet sind, nicht zur selben Zeit eingeschaltet zu werden,
**dadurch gekennzeichnet,**
**daß** die Projektionsoptik (28, 128, 228) eine Hauptlinse (18, 118, 218) und einen Flansch (26, 126, 226) enthält, der sich vom Kantenabschnitt der Hauptlinse (18, 118, 218) erstreckt, wobei der Flansch (26, 126, 226) einstückig mit der Hauptlinse (18, 118, 218) ausgebildet ist,
**daß** das von der ersten Lichtquelle (14, 114, 214) emittierte Licht durch die Hauptlinse (18, 118, 218) in Richtung der Vorderseite des Fahrzeuges emittiert wird und
**daß** das von der zweiten Lichtquelle (22, 122, 222) emittierte Licht durch den Flansch (26, 126, 226) in Richtung der Vorderseite des Fahrzeuges emittiert wird.

2. Fahrzeuglampe nach Anspruch 1,
wobei die erste Lichtquelle (14, 114, 214), das erste optische Element (16, 17, 116, 117, 217) und die Hauptlinse (18, 118, 218) eine Abblendlichtlampe bilden.

3. Fahrzeuglampe nach Anspruch 1 oder 2,
wobei die zweite Lichtquelle (22, 122, 222), das zweite optische Element (24, 124, 224) und der Flansch (26, 126, 226) eine Tagfahrlichtlampe bilden.

4. Fahrzeuglampe nach einem der Ansprüche 1 bis 3,
wobei die Menge an von der ersten Lichtquelle (14, 114, 214) erzeugter Wärme größer ist als die von der zweiten Lichtquelle (22, 122, 222) und
der Kühlkörper dazu ausgebildet ist, Wärme abzustrahlen, die von wenigstens der ersten Lichtquelle (14, 114, 214) erzeugt wird.

## Revendications

1. Lampe pour véhicule comprenant :
une première (14, 114, 214) et une deuxième (22, 122, 222) source de lumière qui sont constituées de dispositifs émetteurs de lumière à semiconducteur ;
un premier élément optique (16, 17, 116, 117, 217) qui commande la lumière émise par la première source de lumière (14, 114, 214) ;
un deuxième élément optique (24, 124, 224) qui commande la lumière émise par la deuxième source de lumière (22, 122, 222) ;
une lentille de projection (28, 128, 228) qui émet la lumière commandée par le premier (16, 17, 116, 117, 217) et le deuxième (24, 124, 224) élément optique vers l'avant d'un véhicule ; et
un unique dissipateur de chaleur (20, 120, 220) relié thermiquement à la fois à la première (14, 114, 214) et à la deuxième (22, 122, 222) source de lumière,
la première (14, 114, 214) et la deuxième (22, 122, 222) source de lumière étant configurées de manière à ne pas être allumées en même temps,
**caractérisée en ce que** la lentille de projection (28, 128, 228) comporte une lentille principale (18, 118, 218) et une bride (26, 126, 226) s'étendant depuis une partie de bord de la lentille principale (18, 118, 218), la bride (26, 126, 226) étant formée d'un seul tenant avec la lentille principale (18, 118, 218),
**en ce que** la lumière émise par la première source de lumière (14, 114, 214) est émise à travers la lentille principale (18, 118, 218) vers l'avant du véhicule, et
**en ce que** la lumière émise par la deuxième source de lumière (22, 122, 222) est émise à travers la bride (26, 126, 226) vers l'avant du véhicule.

2. Lampe pour véhicule selon la revendication 1,
dans laquelle la première source de lumière (14, 114, 214), le premier élément optique (16, 17, 116, 117, 217) et la lentille principale (18, 118, 218) forment un feu de croisement.

3. Lampe pour véhicule selon la revendication 1 ou 2,
dans laquelle la deuxième source de lumière (22, 122, 222), le deuxième élément optique (24, 124, 224) et la bride (26, 126, 226) forment un feu de circulation de jour.

4. Lampe pour véhicule selon l'une quelconque des revendications 1 à 3,
dans laquelle la quantité de chaleur générée par la première source de lumière (14, 114, 214) est supérieure à celle qui provient de la deuxième source de lumière (22, 122, 222), et
le dissipateur de chaleur (20, 120, 220) est configuré pour rayonner la chaleur générée au moins par la première source de lumière (14, 114, 214).
